(19) Europäisches Patentamt / European Patent Office / Office européen des brevets

(11) **EP 3 975 041 A1**

(12) **EUROPEAN PATENT APPLICATION**

(43) Date of publication:
**30.03.2022 Bulletin 2022/13**

(21) Application number: **20306094.2**

(22) Date of filing: **25.09.2020**

(51) International Patent Classification (IPC):
*G06K 9/00* *(2022.01)*

(52) Cooperative Patent Classification (CPC):
**G06V 40/23**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **INSTITUT NATIONAL DE LA SANTE ET DE LA RECHERCHE MEDICALE - INSERM**
**75013 Paris (FR)**

• **Université de Rennes 1**
**35065 Rennes Cedex (FR)**

(72) Inventors:
• **ABBAS, Manuel**
**35700 RENNES (FR)**
• **LE BOUQUIN JEANNES, Régine**
**35760 Saint-Grégoire (FR)**

(74) Representative: **Lavoix**
**2, place d'Estienne d'Orves**
**75441 Paris Cedex 09 (FR)**

(54) **METHOD AND SYSTEM FOR MONITORING PHYSICAL ACTIVITIES OF A PERSON**

(57) The invention concerns a method and system for monitoring physical activities of a person, using a wearable device comprising an accelerometer, the method being implemented by a microcontroller, connected to the accelerometer. The microcontroller is configured to implement a first processing phase to obtain a list of labels representing a sequence of physical activities performed by a person wearing said wearable device with a given temporal rate. The processing comprises obtaining (40) acceleration signals from the accelerometer over time and applying (42) a sliding window to extract segments of acceleration signals at successive time instants, at said temporal rate. The method further comprises applying a first-stage classification (44) of the extracted segments of acceleration signals using a first classifier, to classify each segment of acceleration signals into a plurality of first-level classes of physical activities; and, for at least one subset of segments of acceleration signals classified into a given first-level class, applying a second-stage classification (64) into second-level classes of physical activities. A list of labels representing a sequence of physical activities is obtained.

FIG.3

EP 3 975 041 A1

**Description**

The present invention concerns a method and a system for monitoring physical activities of a person.

The invention belongs to the field of human activity recognition, and finds applications particularly in the field of healthcare monitoring systems.

Recently, many physical activities monitoring systems, using connected devices, have been developed. Such systems rely on wearable devices comprising sensors, such as connected watches, belts or even smartphones, or on ambient sensors such as cameras or movement detectors. The wearable devices outperform ambient sensors in terms of privacy. Moreover, they are not limited to indoor environments.

Some already commercialised systems are meant for monitoring physical activities, for example fitness activities, such as FitBit Charge ®, which is a wristband including health metrics like heart rate, calories burned and others.

Most of the prior art systems are oriented for a broad audience, and mainly provide information related to sport and fitness activities.

In the area of healthcare, the human activity recognition, and in particular the recognition of certain physical activities which qualify as 'activities of daily living' may be used for frailty analysis, rehabilitation, and prevention of accidents, especially for elderly persons. For patients recovering from a physical condition, for example from an accident or a stroke, detailed information on activities of daily living is useful for the medical staff to monitor the level of recovery of the patient. For an accurate follow-up of daily living activities, a long term monitoring is necessary, as well as a sufficient level of detail in the classification of physical activities.

The aim of the invention is to provide a fully automated human activity recognition system, which is useful in the healthcare field. This and other objects are achieved by a method for monitoring physical activities of a person, using a wearable device comprising an accelerometer, the method being implemented by a microcontroller, connected to the accelerometer. The microcontroller is configured to implement a first processing phase to obtain a list of labels representing a sequence of physical activities performed by a person wearing said wearable device with a given temporal rate, comprising:

- obtaining acceleration signals from the accelerometer over time,
- applying a sliding window of predetermined first duration to extract segments of acceleration signals at successive time instants, two successive sliding windows having an overlap of a second duration, the difference between the first duration and the second duration being equal to said temporal rate,
- applying a first-stage classification of the extracted segments of acceleration signals using a first classifier, to classify each segment of acceleration signals into a plurality of first-level classes of physical activities;
- for at least one subset of segments of acceleration signals classified into a given first-level class, applying a second-stage classification into second-level classes of physical activities, and
- attributing a label of a class of physical activity associated to each extracted segment of acceleration signals; so as to obtain a list of labels representing a sequence of physical activities.

Advantageously, the method assigns labels to the consecutive acceleration segments, at a given temporal rate, using a sliding window. Advantageously, the method proposed is able to predict the sequence of performed physical activities.

Advantageously, the first phase of classification comprises a first-stage processing and a second-stage processing, and so, the computational speed is increased and the quantity of resources, such as power consumption, is decreased.

In embodiments of the invention, the method for monitoring physical activities of a person comprises one or more of the following features, considered alone or according to all technically possible combinations.

The method further comprises a second processing phase comprising grouping successive labels so as to obtain temporal periods associated to classes of physical activities.

The method further comprises displaying information relative to said temporal periods associated to classes of physical activities on a display.

The method further comprises computing complementary information relative to the physical activities during said temporal periods and displaying said complementary information on a display.

The first-stage classification comprises, for each segment of acceleration signals, a feature computation step comprising computing a feature relative to a magnitude of the acceleration.

The first-stage classification outputs three first-level classes, namely (i) physical activities presenting a shock, (ii) physical activities where the vertical component of the acceleration is showing a change of orientation, and (iii) physical activities which do not belong to either classes (i) or (ii).

The acceleration signals are tri-axial acceleration signals comprising three acceleration components according to three mutually orthogonal axes, and the feature computation step comprises further segmenting the segment of acceleration signals into sub-segments, and computing, from, for each segment of acceleration signals,

- a first feature representative of the variation of a vertical component of the acceleration among the sub-segments of said segment,
- a second feature representative of the maximal amount of variation or dispersion of acceleration magnitude among the sub-segments of said segment.

The method further comprises, for segments classified into class (iii), a second-stage classification comprising dividing each segment into sub-segments, computing a third feature from said sub-segments, and applying an analysis to divide into second-level classes of 'inactivity', 'cyclic activity' and 'transient activity'.

The method further comprises, for segments classified as 'cyclic activity', a third-stage classification using a second classifier to discriminate between 'walking' and 'jogging'.

The method further comprises, for segments classified as 'transient activity', a further feature computing step for computing values of deviation of orientation of an acceleration component to discriminate between 'sitting down', 'standing-up' and 'other'.

The classes of physical activities comprise: 'sitting-down', 'standing-up', 'lying-down', 'rising up', 'walking', 'jogging', 'staying still' and 'other'.

The wearable device further comprises a barometer, and the method further comprises using sensor information acquired by the barometer to distinguish, within the segments labelled as 'walking' class, two supplementary classes of physical activities which are 'going upstairs" and 'going downstairs'.

The invention relates also to a system for monitoring physical activities of a person, comprising a wearable device comprising an accelerometer, and a microcontroller, connected to the accelerometer. The microcontroller is configured to implement a first processing phase to obtain a list of labels representing a sequence of physical activities performed by a person wearing said wearable device with a given temporal rate, the microcontroller comprising:

- a module for obtaining acceleration signals from the accelerometer over time,
- a module for applying a sliding window of predetermined first duration to extract segments of acceleration signals at successive time instants, two successive sliding windows having an overlap of a second duration, the difference between the first duration and the second duration being equal to said temporal rate,
- a module for applying a first-stage classification of the extracted segments of acceleration signals using a first classifier, to classify each segment of acceleration signals into a plurality of first-level classes of physical activities;
- for at least one subset of segments of acceleration signals classified into a given first-level class, a module for applying a second-stage classification into second-level classes of physical activities,
- modules for attributing a label of a class of physical activity associated to each extracted segment of acceleration signals; so as to obtain a list of labels representing a sequence of physical activities.

The advantages of the system for monitoring physical activities of a person are analogous to the advantages of the method for monitoring physical activities of a person.

According to a particular embodiment, the wearable device further comprises a barometer, the system being further configured to compute complementary information relative to the physical activities during said temporal periods and to display said complementary information on the display screen.

According to a particular aspect, the system further comprises a device configured to communicate with said microcontroller and comprising a display screen, configured to implement a second processing phase comprising grouping successive labels so as to obtain temporal periods associated to classes of physical activities, and to display information relative to said temporal periods associated to classes of physical activities on the display screen.

According to another aspect, the invention concerns a computer program comprising software instructions which, when they are executed by a programmable electronic device, implement a method for monitoring physical activities of a person as briefly described above.

According to another aspect, the invention concerns a non-transitory storage medium configured to store a computer program comprising software instructions, which, when they are executed by a programmable electronic device, implement a method for monitoring physical activities of a person as briefly described above.

Further characteristics and advantages of the present invention will become apparent from the following description, provided merely by way of non-limiting example, with reference to the enclosed drawings, in which:

- Figure 1 shows a system for monitoring physical activities of a person according to an embodiment of the present invention;
- Figure 2 shows schematically an example of overlapping sliding windows and corresponding segments of acceleration signals and labels of classes of physical activities obtained;

- Figure 3 is a flowchart of the main steps of a first processing phase of a method for monitoring physical activities according to an embodiment of the invention;
- Figure 4 illustrates an example of classification into first-level classes using first and second computed features;
- Figure 5 illustrates the orientation of a tri-axial accelerometer;
- Figure 6 illustrates examples of segments of acceleration magnitude corresponding to three different second-level classes;
- Figure 7 shows the vertical component of acceleration following two opposite human movements;
- Figure 8 shows two examples of acceleration magnitude representing two physical activities, namely (a) walking and (b) jogging;
- Figure 9 is a flowchart of the main steps of a second processing phase of a method for monitoring physical activities according to an embodiment of the invention;
- Figure 10 is an example of display of information on physical activities.

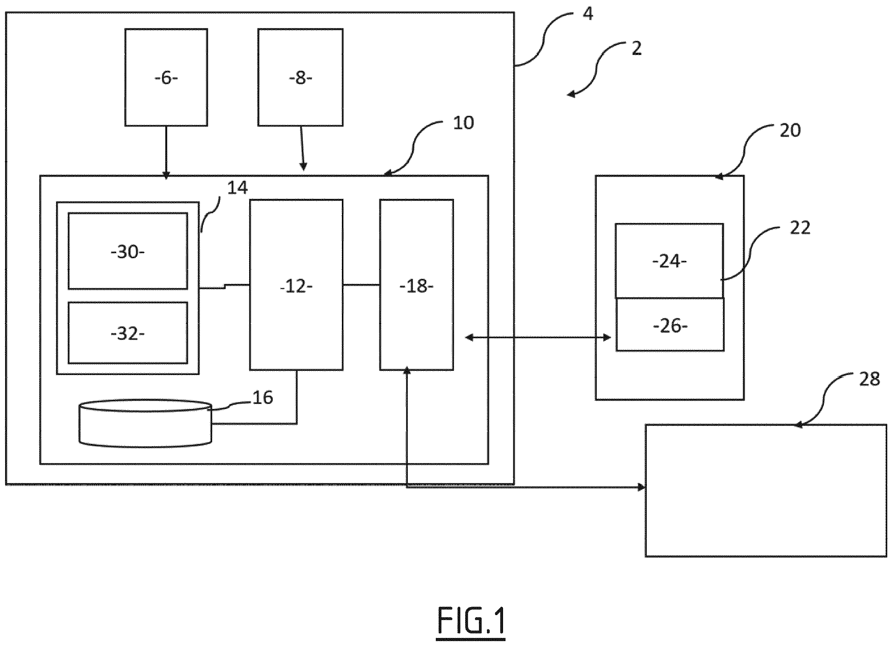

Figure 1 illustrates a system 2 for monitoring physical activities of a person according to an embodiment of the invention.

The monitoring system 2 comprises a wearable device 4, which can be worn by a person in everyday life. For example, the wearable device 4 is a smart beltpositioned around the waist or the hip of a user. Advantageously, such a wearable device is positioned close to the center of body mass of the person. In the following, a person wearing such a device is called a subject.

According to an embodiment, the wearable device 2 is a smart belt, with built-in sensors, which are in the example of figure 1 an accelerometer 6 and a barometer 8, respectively adapted to acquire acceleration data and pressure data.

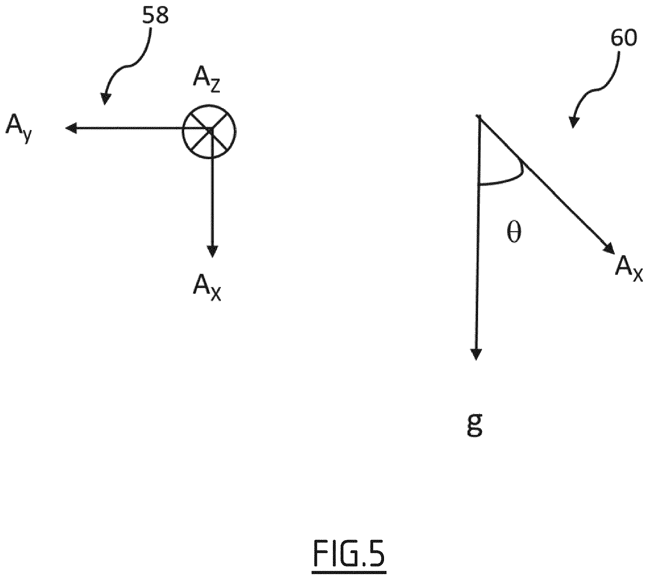

Preferably, the accelerometer 6 is a tri-axial accelerometer, providing three acceleration components according to three mutually orthogonal axes, as explained hereafter in relation to figure 5. Such an accelerometer provides three acceleration components, each comprising data representative of the linear acceleration and the gravity acceleration according to one direction, reference hereafter as Ax, Ay, Az. The accelerometer is a sensor configured to acquire data over time, the outputs of the accelerometer being samples of three raw acceleration signals over time.

According to an embodiment, the accelerometer 6 uses MEMS (for Micro-Electro Mechanical Systems) technology, and has a sampling frequency up to 100 Hz or 1 KHz, for example equal to 50Hz.

The wearable device 4 further comprises a microcontroller 10, adapted to receive the raw data acquired by the accelerometer 6 and by the barometer 8.

The microcontroller 10 comprises a processor 12, electronic memory units 14, 16 and an interface unit 18, which are all connected via internal communication buses.

The interface unit 18 is adapted to communicate data, using radio communication technology for example, to an external device 20, which comprises a human-machine interface 22. The external device 20 is for example a smartphone, a pad, a laptop etc. The human-machine interface 22 comprises a display screen 24, and a command module 26 adapted to receive commands from a user. According to an embodiment, the display 24 is a tactile display, which serves for both displaying and acquiring user commands.

Furthermore, according to an embodiment, the interface unit 18 is also adapted to communicate data to a distant server 28. For example, server 28 is a server of medical data, the data being provided to medical staff for health monitoring of a patient.

The system 2 for monitoring physical activities of a person is configured to acquire data from the sensors 6, 8 and to process the data according to a method for monitoring physical activities of a person which will be described in detail hereafter.

The microcontroller 10 is configured to implement a first processing phase module 30 which analyses the acceleration signals data acquired by the accelerometer to output labels representative of physical activities of the person wearing the wearable device 4, at a given temporal rate, and a second processing phase module 32 which computes information on the physical activities for display, in particular groups the labels output by module 30 so as to obtain temporal periods associated to classes of physical activities.

According to an embodiment, the first processing phase module 30 and the second processing phase module 32 are are implemented as software, in the form of a computer program, stored in a memory 14 of the system 2 for monitoring physical activities, and executed by the processor 12. Alternatively, the modules 30, 32 are stored on a non-volatile information recording medium, such as an optical disk, a magneto-optical disk, any type of non-volatile memory (e.g. EPROM, EEPROM, FLASH, NVRAM), a magnetic card or and optical card.

In an alternative embodiment, each of the modules 30, 32 is implemented by a FPGA (Field Programmable Gate Array), or a dedicated integrated circuit such as an ASIC (Applications Specific Integrated Circuit).

In an alternative, the first processing module 30 is implemented by the microcontroller 10, and the second processing module 32 is stored in a memory of the external device 20 and executed by a processor of the external device 20.

The first processing phase analyses the data received from the sensors, and in particular the acceleration signals acquired by the accelerometer.

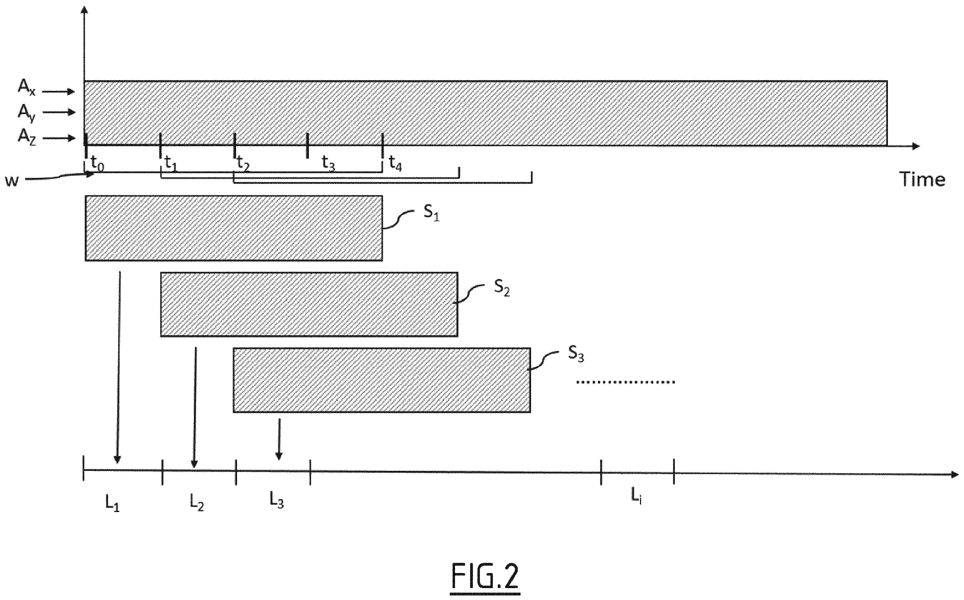

The acceleration signals acquired over time are received, and segmented using a sliding window, as shown schematically in figure 2.

A window designates a time period, having a starting time, an ending time and a duration.

Acceleration signals Ax, Ay, Az are acquired over time by the accelerometer 6.

As shown in figure 2, considering a given time period, a first segment of acceleration signals $S_1$ is extracted by applying a window w of first duration $T_1$, which is equal to 4 time units in the example of figure 2, for example 4 seconds (s).

According to an alternative embodiment, a first duration $T_1$=6s is chosen.

More generally, the first duration $T_1$ is comprised between 4s and 8s. Next, a segment of acceleration signals $S_2$ of first duration $T_1$ is extracted, and so on, so as to obtain segments of the acceleration signals at successive time instants.

Two successive segments of acceleration signals have an overlap of a second duration $T_2$, equal to 3 time units in the example of figure 2, for example 3 s. In other words, two successive segments have an overlap of 75% in this example.

In the alternative where $T_1$=6s, and overlap of $T_2$=5s is envisaged.

Each segment $S_i$ of acceleration signals is classified into one of several classes of physical activities, and an associated label $L_i$ of a class of physical activities associated is output. Given the overlap of the segments, a label $L_i$ is output with a given temporal rate, equal to the difference between the first duration $T_1$ and the second duration $T_2$.

The temporal rate is the same for both examples of duration and overlap provided above.

Preferably, the temporal rate is equal to 1s, therefore a label is provided every second.

The determination of the labels associated to each class of physical activities is achieved during a first processing phase of the method for monitoring physical activities described herein. A list of labels $L_1$, $L_2$, $L_3$,...$L_i$ representing a sequence of physical activities performed by the person wearing the wearable device is obtained.

During a second processing phase, the labels are further processed in order to output temporal periods associated with classes of physical activities.

During the first processing phase, the segments of acceleration signals are analysed according to several successive classification stages, as described hereafter.

The analysis of the acquired acceleration data provides a classification into the following classes of physical activities: (1) lying down, (2) rising up, (3) inactivity, (4) walking, (5) jogging, (6) sitting down, (7) standing up.

Furthermore, the use of barometric data further allows distinguishing between walking, (8) going upstairs and (9) going downstairs. All physical activities that are not classified into one of the above classes are labelled as "other", which can therefore be considered as another class of physical activities. Advantageously, considering a supplementary class "other" allows to attribute labels to all time periods without any gap.

Furthermore, for the case of "inactivity", information regarding the posture of the person may be further determined as explained in detail below.

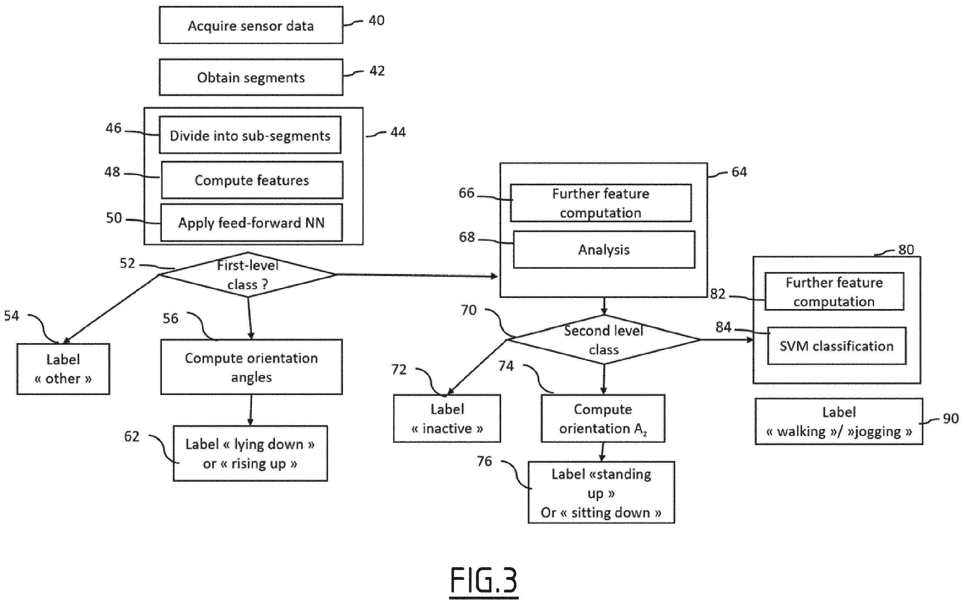

Figure 3 is a flowchart of an embodiment of the first processing phase of the method of monitoring physical activities of a person.

The first processing stage comprises, according to this embodiment, a first step 40 of obtaining acceleration signals at successive time instants over a period of time, and a step 42 of applying overlapping analysis sliding windows, as explained with reference to figure 2, to obtain overlapping segments of acceleration signals of first duration $T_1$.

Each segment of acceleration signals comprises three digital signals comprising acceleration values $\{a_{x,i}\}$, $\{a_{y,i}\}$, $\{a_{z,i}\}$ acquired by the accelerometer during the corresponding analysis window, having an associated starting time and ending time.

A first-stage classification 44 is applied, to classify the segments of acceleration signals into three first-level classes, depending on features computed from the segments of acceleration signals.

According to an embodiment, the first-stage classification comprises a step 46 of further segmenting each segment of acceleration signals into sub-segments, which also have an overlap, for example an overlap of 50%.

According to a non-limitative example, a segment of first duration equal to 4s is divided into 15 sub-segments of 500ms, with an overlap of 250ms. According to an alternative, a segment of first duration 6s is divided into 23 sub-segments of 500ms.

For each sub-segment, in a feature computation step 48, characteristic features of the sub-segments are computed on the acceleration magnitude, and on the vertical acceleration component Ax. The features computed for each sub-segment are further memorized.

Let $\|a\|$ be the acceleration magnitude on a given segment, which is a signal comprising acceleration magnitude

$$\text{values:} \|a\|_i = \sqrt{a_{x,i}^2 + a_{y,i}^2 + a_{z,i}^2},$$

where $a_{x,i}$, $a_{y,i}$, and $a_{z,i}$ are the values of the three acceleration components.

The acceleration magnitude$\|a\|$ is divided into sub-segments $S_{\|a\|,k}$.

Similarly, let $S_{Ax,k}$ be a sub-segment of the vertical component of the acceleration.

Further, $\sigma_{\|a\|,k}$ denotes the standard-deviation of sub-segment $S_{\|a\|,k}$ and $\mu_{Ax,k}$ the mean value of sub-segment $S_{Ax,k}$.

Next, two features characterizing the segment are computed, which are respectively:

$$F_1 = \max(\mu_{Ax,k}) - \min(\mu_{Ax,k})$$

$$F_2 = \max(\sigma_{\|a\|,k}) - \min(\sigma_{\|a\|,k})$$

The first feature $F_1$ is representative of the variation of the vertical component of the acceleration within the time period corresponding to the considered window of acceleration signals.

The second feature $F_2$ is representative of the maximal amount of variation or dispersion of the acceleration magnitude.

The first and second features are input to a first classifier, which is, in the preferred embodiment, a feed-forward neural network, which processes the features to output a classification into first-level classes (step 50).

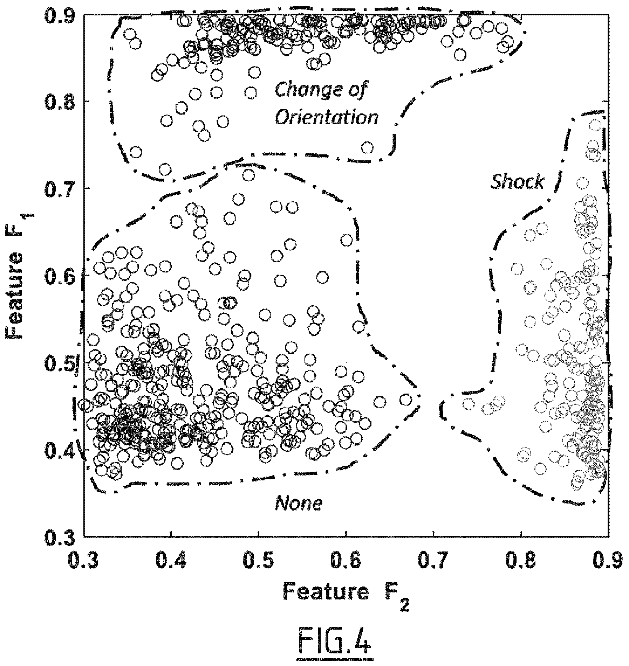

According to an embodiment, the first-stage classification classifies the segments into first-level classes, an example of which is shown in figure 4, which are respectively referenced as:

- first-level class 1: "Shock",
- first-level class 2 : "Orientation" and
- first-level Class 3 :"None", comprising all segments that do not belong to the "Shock" or "Orientation" classes.

According to a preferred embodiment, the feed-forward neural network is a shallow learning neural network, comprising one single hidden layer, with 10 neurons and a customized activation function f(x):

$$f(x) = \frac{x}{1 + |x|}$$

Advantageously, the customized activation function is easy to compute.

The parameters defining a the feed-forward neural network for classifying the inputs into one of the first-level classes mentioned above are stored in a memory unit, for example in the memory unit 16 of the microcontroller 10.

Alternatively, a classical hyperbolic tangent sigmoid activation function is used.

Alternatively, the single hidden layer comprises any number of neurons, according to a design choice.

Figure 4 shows an example of distribution of the segments according to the values of the first feature $F_1$ and the second feature $F_2$, and how they are clustered into three families or groups, namely the corresponding first-level classes.

According to alternative embodiments, a different first classifier is applied in the first-stage classification step 44. For example, a k-NN (« k-Nearest Neighbor ») classifier is applied, a decision tree or a random forest classification algorithm.

For each segment of acceleration signals, a first-level class is obtained, and the processing differs according to the classification which is identified in step 52.

If the first-level class is "class 1: Shock", a label "other" is associated to the considered segment (step 54), given that the "shock" is not represented among the outputs of the considered physical activities.

It is, however, to be noted that, according to alternatives, the first-level class "shock" may be further added and considered as an output of the classification.

If the first-level class is "class 2: Change of Orientation", meaning that the first feature $F_1$ representative of the variation of the vertical component of the acceleration within the time period corresponding to the considered window is significant, then step 52 is followed by step 56 of further computing parameters in order to characterize the physical activity. Indeed, it is noted that a significant value of the first feature Fi, which indicates a change of orientation of the vertical component of the acceleration, is likely to be representative of "lying down" or "rising up" classes.

According to an embodiment, step 56 consists of computing an angle $\theta$ between the normalized vertical component of the acceleration and the gravity axis in the Earth frame, namely computing a first value $\theta_1$ of the angle $\theta$ at the beginning of the movement and a second value $\theta_2$ of the angle $\theta$ at the end of the movement. The sign of the difference between the second value $\theta_2$ and the first value $\theta_1$ indicates a direction of change of orientation of the vertical component of the acceleration, and therefore indicates whether the class is "lying down" or "rising up".

For example, the first value $\theta_1$ is computed from an average of the normalized vertical component of the acceleration and the gravity axis in the Earth frame during the first S ms of the considered window. The second value $\theta_2$ is computed from an average of the normalized vertical component of the acceleration and the gravity axis in the Earth frame during the last S ms of the considered window, where S is for example comprised between 500 ms and 1000 ms.

Figure 5 shows schematically a referential 58 of the 3 components of the acceleration provided by the sensor, in the initial position, typically when the person wearing the wearable device 6 is standing still, comprising a vertical component $A_x$ and two horizontal components $A_y$ and $A_z$. Figure 5 also shows a representation 60 showing the angle $\theta$ between the gravity axis in the Earth frame and the vertical component $A_x$. When the person wears the accelerometer around the waist or the torso, such a change of orientation of the vertical component $A_x$ represents a movement around the horizontal axis $A_z$.

According to the difference between the first angle $\theta_1$ and the second angle $\theta_2$, a label corresponding to classes "Lying down" or "Rising up" is associated to the current segment (step 62).

If the first-level class is "class 3: None", a further, second-stage classification 64 is applied. The third first-level class "None" is a meta-class of physical activities, comprising a number of classes of physical activities.

The second-stage classification 64 comprises a further feature computation step 66, wherein the ranges $R_{\|a\|,k}$ of each sub-segment of a considered segment of the acceleration magnitude are computed and memorized.

Next, the arrays of ranges $R_{\|a\|,k}$ and of standard deviation values $\sigma_{\|a\|,k}$ of the acceleration magnitude for each sub-segment of the considered segment are analysed at analysis step 68.

This analysis step 68 determines a second-level class for the corresponding time period (e.g. analysis window), using a simple array indexing operation, as explained hereafter.

At each position i, if $R_{\|a\|,i}$ is below a range threshold Th_R, for example 0.15 g, and $\sigma_{\|a\|,i}$ is below a deviation threshold Th_$\sigma$, for example 0.04, it means that there is no movement during this time slot. Hence, this position is labelled as "0". Otherwise, it is labelled as "1". Consequently, the labelling operation results in a binary array of $k$ elements. Afterwards, a voting technique is applied to each array of binary elements, resulting in a smaller array of length $k' < k$, for example $k'$ equal to 5. This resultant binary number of $k'$ digits represents an address in a predefined lookup table.

This zero-indexed table contains a second-level class related to each address. For example, if the resultant binary array is equal to [1 1 1 1 1], thus 31 in decimal, it means that a recurrent movement is detected in the corresponding acceleration window. In this case, the label of the $32^{nd}$ element in this lookup table is "cyclic".

Alternatively, any memory structure, other than a look-up table, may be used to associate a second-level class to an array of binary elements.

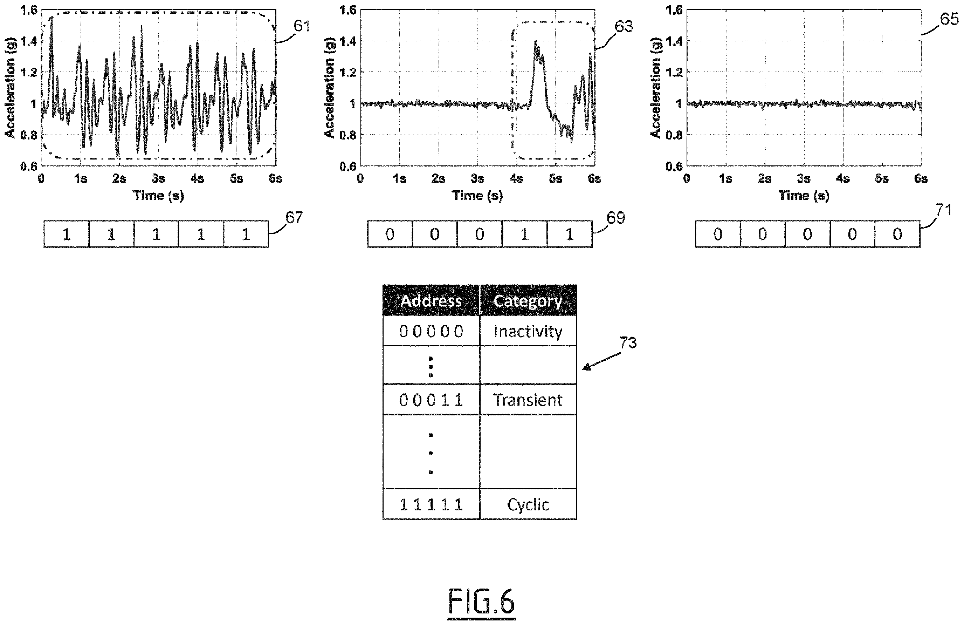

Figure 6 illustrates three examples of segments 61, 63, 65 of acceleration magnitude, and corresponding arrays 67, 69 and 71 of binary elements, each array of binary elements comprising 5 elements in this example. An example of look-up table 73 is also represented, showing the second-level classes associated to the binary arrays.

According to the result of the analysis step 68, it is determined (step 70) whether the segment belongs to one of the following second-level classes: (1) Inactivity, (2) Cyclic activity, (3) Transient activity.

If the second-level class determined is "inactivity", then a corresponding label is associated to the segment (step 72), and the orientation of the acceleration components are computed to indicate the body posture, for example by computing a mean value of orientation for each acceleration component over the time period associated to the segment. A set of three orientation values is obtained and stored in memory in association with the "inactivity" period. A body posture among 'sitting' posture, 'standing' posture, and "lying down" posture may be estimated from the set orientation values. The body posture is a complementary information recorded along with this class of physical activities.

If the second-level class determined is "transient", this means that the person is in a transition from active to inactive or vice-versa.

A further computation 74 is applied to determine whether the vertical component of the acceleration $A_x$ remains vertical during the considered period of time of the analysed segment, and the orientation of the component $A_z$, which points to the human body, is quantified to distinguish between "standing up" and 'sitting down'. If no significant deviation is encountered, it is concluded that the transient activity is different ("other") from "standing up" or "sitting down", for example the starting or ending phase of a cyclic activity.

The segment is then labelled according to the class of physical activity determined (step 76), i.e. "standing up", "sitting down" or "other".

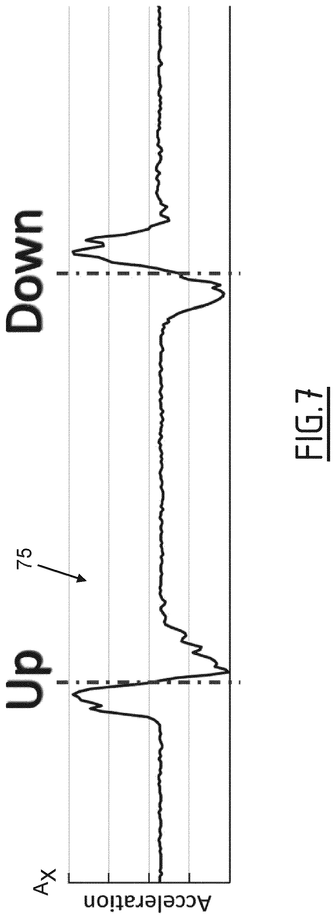

Figure 7 shows an example of the profile of vertical acceleration component signal during time comprising a "standing up" transition and a "sitting down" transition (graph 75). The shape of the acceleration signal indicates the direction of the movement (up or down) resulting from the aforementioned transient activities.

If the second-level class determined is "cyclic", then step 70 is followed by a third-stage classification 80, to discriminate between the physical activities "walking" and "jogging".

The third-stage classification comprises, according to an embodiment, a further analysis 82 of the acceleration magnitude, to compute a third feature $F_3$ characterizing the segment, called variability, and a fourth feature $F_4$ of the segment, called "weightlessness".

The variability $F_3$ is equal to the mean value of the differences between two consecutive points of the acceleration magnitude.

The weightlessness feature $F_4$ is the sum of the weightlessness intervals' periods, a weightlessness interval being an interval for which the acceleration magnitude is close to zero, i.e. smaller than a predetermined weightlessness threshold $Th\_W_a$, for example less than 0.3 g.

The third feature $F_3$ and the fourth feature $F_4$ are provided as inputs to a second classifier, which is in the preferred embodiment a quadratic support vector machine (SVM). The second classifier is applied (step 84) to discriminate between the classes "Walking" and "Jogging".

Alternatively, the second classifier is a linear SVM, a k-NN, a decision tree or other known machine learning supervised classifying algorithms.

For the time periods classified as "walking", the corresponding pressure data acquired by the barometer is memorized.

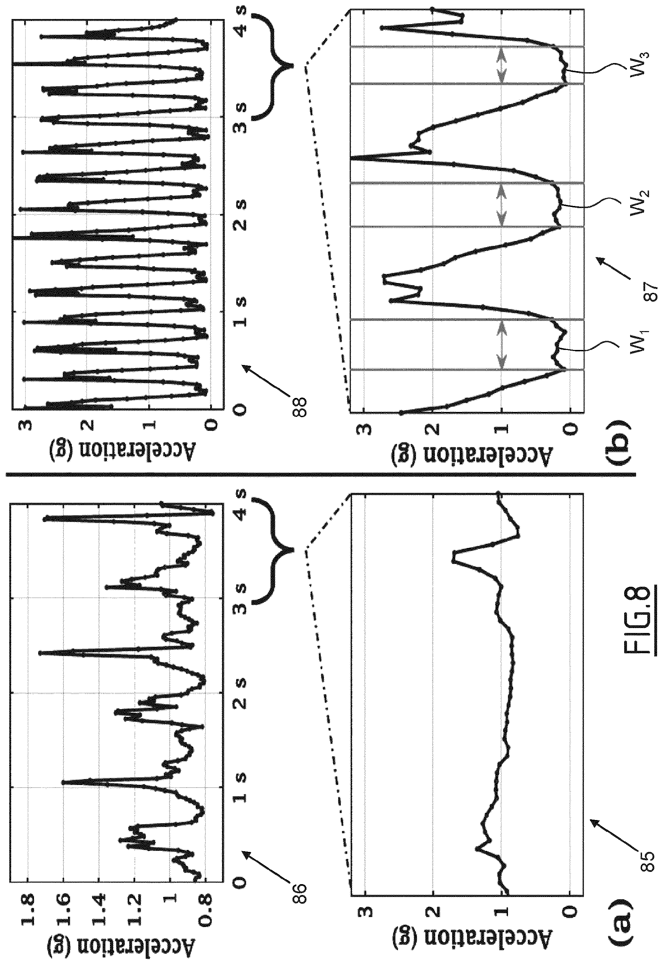

Figure 8 shows examples of acceleration magnitude during walking (graph 86) and during jogging (graph 88), and corresponding detailed portions 85, 87 of a 1s duration extracted from each graph. The weightlessness intervals $W_1$, $W_2$, $W_3$ observed in the acceleration magnitude during jogging are visible, whereas it is also shown that the acceleration magnitude during walking does not comprise weightlessness intervals.

The output of the third-stage classification allows discriminating between "walking" and "jogging", and corresponding labels are attributed (step 90).

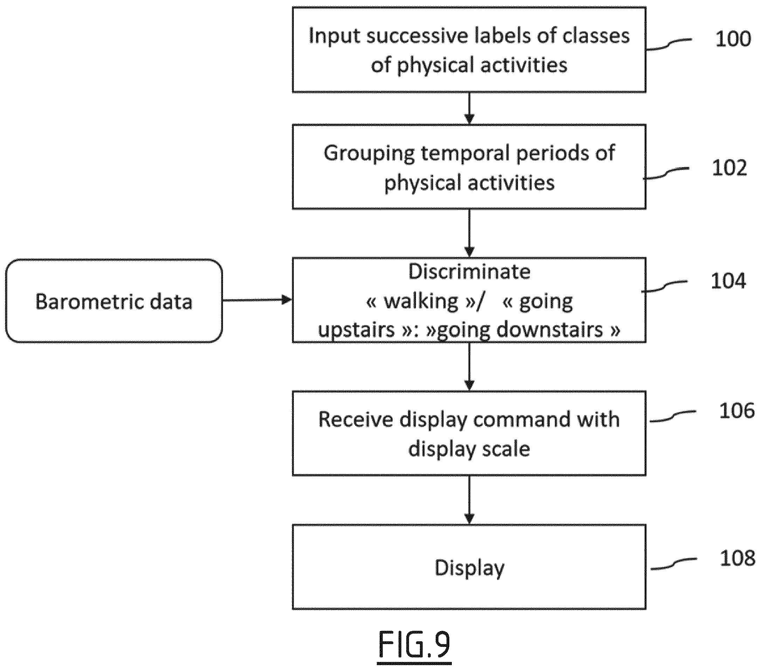

Figure 9 is a flowchart of an embodiment of the second processing phase of a method of monitoring physical activities according to the invention.

The second processing phase comprises a step 100 of receiving the successive labels representative of the physical activities obtained in the first processing stage, which are the outputs of the first phase at a given temporal rate, for example every second.

For example, in this case, for an entire day of monitoring of physical activities, the output consists of 86400 labels.

Next, the successive labels are processed at processing step 102 for grouping labels to obtain temporal periods, of variable durations, associated with physical activities, so as to obtain results which can be easily interpreted by a user.

For example, successive labels indicating "walking" are grouped and form a period of SW seconds of walking. The results of the processing, including starting time, ending time and or duration of the temporal period, the associated physical activity, and optionally, complementary information, are stored.

Furthermore, this processing eliminates outliers in the labelling, for example if a single label "jogging" is present among a series of successive "walking" labels, the temporal period is labelled as "walking' as a whole.

Advantageously, the reliability of the recognition process exceeds 99%.

In particular, when the label "walking" is associated with a temporal period, step 102 is followed by step 104 of discriminating between "walking" and "going upstairs" or "going downstairs". This analysis is based on further barometric data captured by the barometer.

In particular, it is proposed, for a temporal period labelled as "walking", to estimate an altitude variation between the beginning and the end of the temporal period, using the mean pressure during the first time period (of the first segment) of the temporal period, $P_{start}$, and the mean pressure during the last time period (of the last segment) of the temporal period, $P_{end}$, the mean pressure values being provided as barometric data.

For example, the altitude variation is given by the formula:

$$\Delta H = -9.8 \times (P_{end} - P_{start})$$

Advantageously, the estimation of the altitude variation according to this method is less affected by the noise affecting the sensor values.

Furthermore, it is estimated that an altitude variation of 3m corresponds to one floor, therefore further information on the estimated number of floors that the person has climbed may be provided.

The method further comprises, in interaction with a user, for example the person wearing the wearable device, a reception 106 of a display command, providing a temporal scale for display. For example, the user may request a display on an hourly based, or a daily basis.

The results of the method for monitoring physical activities, with the temporal periods and associated physical activities as recorded, are then displayed at display step 108. Further complementary information may also be displayed.

The form of the display and the possibilities of interaction with the user may be adapted according to the needs. For example, more complementary information including activity rate, progress and for example the number of calories spent may also be computed and displayed.

For example, the number of steps during the day may also be calculated and displayed. The number of steps is for example calculated by counting the number of peaks in the acceleration signal when the person wearing the wearable device is standing.

For example, the information display may be embedded as a multi-level display: if a user selects a "walking" period of time, a window pops up showing the walking speed, for example the number of steps per second, the intensity of the activity defined by the range of the acceleration magnitude, the gait quality, expressed for example as a function of the average length of the steps, and the symmetry of the steps.

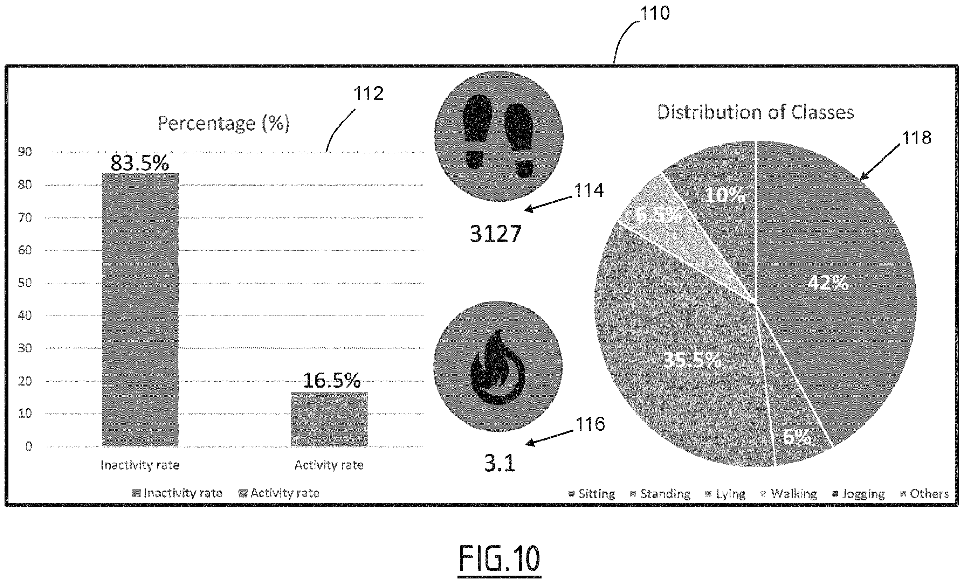

Figure 10 shows an example of an information display 110, showing, for a chosen monitored time period, the percentages of "activity rate" vs "inactivity rate" in a graph 112, the number of steps 114, the quantity 116 of calories spent and a distribution 118 of classes of physical activities.

Advantageously, the method for monitoring physical activities of a person described is efficient in terms of computation, than classification methods using deep learning Convolutional Neural Networks (CNN). Furthermore, the power consumption and the computational complexity of the proposed method are significantly lower than deep learning techniques.

Advantageously, the acceleration signals are finely processed to achieve several stages of classification and to accurately discriminate between classes of physical activities.

Advantageously, several types of physical activities including transient phases of physical activities are discriminated using the proposed method.

The method has been tested on the public dataset called "Sisfall", as described in the article "Sisfall: A fall and movement dataset", by A. Sucerquia et al, published in Sensors, volume 17, pages 1-14, January 2017. The dataset consists of 19 types of physical activities simulated by 38 subjects: 23 young subjects ranging from 19 to 30 years old, and 15 elderly ranging from 60 to 75 years old. The acceleration data was collected using two accelerometers, ADXL345[®] and MMA8451Q[®], and a gyroscope (ITG3200[®]), with a sampling frequency equal to 200 Hz for all modalities. The acceleration data acquired from ADXL345[®] was downsampled by a factor 4 to reach 50Hz, and cut using 4-second windows. The dataset extracted randomly for each subject comprises windows of transient physical activities (i.e. sitting down, standing up, lying down, rising up, as well as activities presenting a shock such as jumping or stumbling) and for cyclic activities (walking, jogging, using the stairs). The final dataset consists of 17878 acceleration signals of 200 samples each (4x50Hz), distributed and labelled as follows : 1682 as "sitting down", 1813 as "standing up", 1161 as "lying down", 1170 as "rising up", 5700 as "walking" (including 1657 "using the stairs"), 5700 as "jogging" and 652 as "others".

The proposed method was applied on the segmented 4s windows, with an overlap of 3s.

The reliability of the proposed method was compared to two deep learning techniques that automate the feature extraction: Convolutional Neural Networks (CNN) and Long Short-Term Memory Network (LSTM).

The CNN consists of 4 convolutional layers, each one of them followed by a Max-Pooling layer to reduce overfitting. The activation function of all these layers is 'relu'. The first layer comprises 16 filters with a size equal to 6x3, the remaining layers consist of 32, and 128 filters respectively, with a kernel size equal to 6x1. Finally, the architecture ends with an output layer including 'softmax' as activation function to make predictions. The batch size is equal to 64.

The LSTM network consists of a hidden layer with 50 memory units, followed by a dropout layer intended to reduce overfitting. Another layer of 100 memory units is added, followed by a dense fully connected layer with 'relu' as activation function to transcribe the extracted features by the hidden layers. The output layer includes 'softmax' as transfer function to make predictions. The network is optimized by stochastic gradient descent, and the batch size is 64.

Leave-Subject-Out (LSO) cross validation is used when applying these three different techniques. For each technique, the training is applied on 37 subjects and then the technique is tested on the 38th subject, and the test is repeated 38 times.

The following table shows the statistics on the 38 results, including the mean performance, plus or minus the standard deviation (std), the minimum and maximum, and the mean computed for each of the "Young" and "Elderly" age categories.

| Method | Mean(±std) | Min | Max | Young | Elderly |
|---|---|---|---|---|---|
| CNN | 99.46%(±1.2) | 93.52% | 100% | 99.75% | 99.0% |
| LSTM | 98.53%(±2.5) | 86.33% | 100% | 98.64% | 98.37% |
| Proposed method | 99.68%(±0.7) | 96.42% | 100% | 99.86% | 99.4% |

The proposed method outperforms the other tested techniques (CNN and LSTM) for both age categories, and, notably, the standard deviation is of 0.7, which is quite small. Furthermore, the proposed method uses less computational resources than the deep learning techniques.

Furthermore, advantageously, the recognition of physical activities is not subject-dependent, the performance results are similar for both age categories.

**Claims**

1. Method for monitoring physical activities of a person, using a wearable device comprising an accelerometer, the method being implemented by a microcontroller, connected to the accelerometer, the method being **characterized in that** the microcontroller is configured to implement a first processing phase to obtain a list of labels representing a sequence of physical activities performed by a person wearing said wearable device with a given temporal rate, comprising:

   - obtaining (40) acceleration signals from the accelerometer over time,
   - applying (42) a sliding window of predetermined first duration (T1) to extract segments of acceleration signals at successive time instants, two successive sliding windows having an overlap of a second duration(T2), the difference between the first duration and the second duration being equal to said temporal rate,
   - applying a first-stage classification (44) of the extracted segments of acceleration signals using a first classifier, to classify each segment of acceleration signals into a plurality of first-level classes of physical activities;
   - for at least one subset of segments of acceleration signals classified into a given first-level class, applying a second-stage classification (64) into second-level classes of physical activities,
   - attributing (54, 62, 72, 76, 90) a label of a class of physical activity associated to each extracted segment of acceleration signals; so as to obtain a list of labels representing a sequence of physical activities.

2. A method according to claim 1, further comprising a second processing phase comprising grouping (102) successive labels so as to obtain temporal periods associated to classes of physical activities.

3. A method according to claim 2, further comprising displaying (108) information relative to said temporal periods associated to classes of physical activities on a display.

4. A method according to claims 2 or 3, further comprising computing (104) complementary information relative to the physical activities during said temporal periods and displaying (108) said complementary information on a display.

5. A method according to claims 1 to 4, wherein the first-stage classification (44) comprises, for each segment of acceleration signals, a feature computation step (46, 48) comprising computing a feature relative to a magnitude of the acceleration.

6. A method according to claim 5, wherein the first-stage classification outputs three first-level classes, namely (i) physical activities presenting a shock, (ii) physical activities where the vertical component of the acceleration is showing a change of orientation, and (iii) physical activities which do not belong to either classes (i) or (ii).

7. A method according to claim 5 or 6, wherein the acceleration signals are tri-axial acceleration signals comprising three acceleration components according to three mutually orthogonal axes, and wherein the feature computation step (46, 48) comprises further segmenting (46) the segment of acceleration signals into sub-segments, and computing (48), from, for each segment of acceleration signals,

   - a first feature (F1) representative of the variation of a vertical component of the acceleration among the sub-segments of said segment,
   - a second feature (F2) representative of the maximal amount of variation or dispersion of acceleration magnitude among the sub-segments of said segment.

8. A method according to claim 6, further comprising, for segments classified into class (iii), a second-stage classification (64) comprising dividing each segment into sub-segments, computing (66) a third feature from said sub-segments, and applying an analysis to divide into second-level classes of 'inactivity', 'cyclic activity' and 'transient activity'.

9. A method according to claim 8, further comprising, for segments classified as 'cyclic activity', a third-stage classification (80) using a second classifier (84) to discriminate between 'walking' and 'jogging'.

10. A method according to claim 8, further comprising, for segments classified as 'transient activity', a further feature computing step (74) for computing values of deviation of orientation of an acceleration component to discriminate between 'sitting down', 'standing-up' and 'other'.

11. A method according to claims 1 to 10 wherein the classes of physical activities comprise: 'sitting-down', 'standing-up', 'lying-down', 'rising up', 'walking', 'jogging', 'staying still' and 'other'.

12. A method according to claim 11, wherein the wearable device further comprises a barometer, the method further comprises using sensor information acquired by the barometer to distinguish, within the segments labelled as 'walking' class, two supplementary classes of physical activities which are 'going upstairs" and 'going downstairs' .

13. System for monitoring physical activities of a person, comprising a wearable device comprising an accelerometer, and a microcontroller, connected to the accelerometer, the microcontroller being **characterized in that** is configured to implement a first processing phase to obtain a list of labels representing a sequence of physical activities performed by a person wearing said wearable device with a given temporal rate, the microcontroller comprising :

- a module for obtaining acceleration signals from the accelerometer over time,
- a module for applying a sliding window of predetermined first duration (T1) to extract segments of acceleration signals at successive time instants, two successive sliding windows having an overlap of a second duration(T2), the difference between the first duration and the second duration being equal to said temporal rate,
- a module for applying a first-stage classification of the extracted segments of acceleration signals using a first classifier, to classify each segment of acceleration signals into a plurality of first-level classes of physical activities;
- for at least one subset of segments of acceleration signals classified into a given first-level class, a module for applying a second-stage classification into second-level classes of physical activities,
- modules for attributing a label of a class of physical activity associated to each extracted segment of acceleration signals; so as to obtain a list of labels representing a sequence of physical activities.

14. A system according to claim 13, wherein the wearable device further comprises a barometer, the system being further configured to compute complementary information relative to the physical activities during said temporal periods and to display said complementary information on the display screen.

15. A system according to claims 13 or 14, further comprising a device configured to communicate with said microcontroller and comprising a display screen, configured to implement a second processing phase comprising grouping successive labels so as to obtain temporal periods associated to classes of physical activities, and to display information relative to said temporal periods associated to classes of physical activities on the display screen.

FIG.1

FIG.2

FIG.3

FIG.4

FIG.5

EP 3 975 041 A1

FIG.6

**FIG.7**

FIG.8

FIG.9

FIG.10

Europäisches
Patentamt

European
Patent Office

Office européen
des brevets

# EUROPEAN SEARCH REPORT

Application Number

EP 20 30 6094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 032 455 A1 (MOVEA [FR]) 15 June 2016 (2016-06-15) * paragraph [0034] - paragraph [0058] * * paragraph [0073] - paragraph [0077] * ----- | 1-15 | INV. G06K9/00 |
| X | AMINIAN K ET AL: "Ambulatory system for human motion analysis using a kinematic sensor: monitoring of daily physical activity in the elderly", IEEE TRANSACTIONS ON BIOMEDICAL ENGINEERING, IEEE SERVICE CENTER, PISCATAWAY, NJ, USA, vol. 50, no. 6, 1 June 2003 (2003-06-01), pages 711-723, XP011097427, ISSN: 0018-9294, DOI: 10.1109/TBME.2003.812189 * the whole document * ----- | 1-15 | |
| A | ABBAS MANUEL ET AL: "Machine Learning-Based Physical Activity Tracking with a view to Frailty Analysis", 2020 42ND ANNUAL INTERNATIONAL CONFERENCE OF THE IEEE ENGINEERING IN MEDICINE & BIOLOGY SOCIETY (EMBC), IEEE, 20 July 2020 (2020-07-20), pages 3917-3920, XP033815566, DOI: 10.1109/EMBC44109.2020.9175589 [retrieved on 2020-08-24] * the whole document * ----- | 1-15 | TECHNICAL FIELDS SEARCHED (IPC) G06K |

The present search report has been drawn up for all claims

| Place of search | Date of completion of the search | Examiner |
|---|---|---|
| The Hague | 22 February 2021 | de Bont, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 6094

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2021

| Patent document cited in search report | | Publication date | Patent family member(s) | | Publication date |
|---|---|---|---|---|---|
| EP 3032455 | A1 | 15-06-2016 | EP 3032455 A1 | | 15-06-2016 |
| | | | US 2016228744 A1 | | 11-08-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. SUCERQUIA et al.** Sisfall: A fall and movement dataset. *Sensors,* January 2017, vol. 17, 1-14